Europäisches Patentamt

**European Patent Office**

Office européen des brevets

(11) Numéro de publication: **0 286 558**
**A1**

(12) # DEMANDE DE BREVET EUROPEEN

(21) Numéro de dépôt: 88440027.6

(22) Date de dépôt: 25.03.88

(51) Int. Cl.⁴: **A 61 C 19/00**
A 61 C 5/00

(30) Priorité: 26.03.87 FR 8704230

(43) Date de publication de la demande:
**12.10.88 Bulletin 88/41**

(84) Etats contractants désignés:
**AT BE CH DE ES GB GR IT LI LU NL SE**

(71) Demandeur: **ERGODENTAL, S.à.r.l.**
**16, rue des Balayeurs**
**F-67000 Strasbourg (FR)**

(72) Inventeur: **Werly, Marc**
**16, rue d'Odessa**
**F-75014 Paris (FR)**

(74) Mandataire: **Metz, Paul**
**Cabinet METZ PATNI 95, rue de la Ganzau**
**F-67100 Strasbourg (FR)**

Le titre de l'invention a été modifié (Directives relatives à l'examen pratiqué à l'OEB, A-III, 7.3)

(54) **Procédé et outil pour obturer une cavité.**

(57) L'invention concerne un procédé pour obturer la cavité d'une dent ou d'un moule, ainsi qu'un outil destiné à la mise en oeuvre du procédé.

Le procédé, du type dans lequel on dépose dans la cavité (3) une résine photosensible destinée à être solidifiée par photopolymérisation, est remarquable selon l'invention en ce que
- on dépose sur les parois (5, 6) de la cavité (3) une couche (8) d'une première résine photosensible à une première radiation lumineuse ;
- on dépose ensuite, sur la couche (8), une masse (10) d'une seconde résine photosensible à une deuxième radiation lumineuse, obturant sensiblement le reste de la cavité (3) ;
- on effectue le durcissement par photopolymérisation de ladite masse (10) par la deuxième radiation lumineuse transmise par un bâtonnet (27) plongé dans la masse (10) ;
- on effectue ensuite, après le durcissement de la masse (10), le durcissement de la couche (8) de résine photosensible par la première radiation lumineuse à l'aide du bâtonnet (27).

Applications : traitement et soins dentaires ainsi que moulage et fonderie de précision.

FIG.6

EP 0 286 558 A1

## Description

**Procédé de photopolymérisation différentielle utilisé pour l'obturation d'une cavité et outil destiné à le mettre en oeuvre.**

La présente invention concerne un procédé de photopolymérisation différentielle à compensation de retrait mettant en oeuvre des résines photosensibles.

Elle concerne plus particulièrement mais non exclusivement un procédé pour obturer une cavité dentaire, ainsi qu'un outil général à main destiné à la mise en oeuvre du procédé.

Quoique ce procédé soit adapté au domaine de la chirurgie dentaire, on perçoit déjà de nombreuses autres applications industrielles du procédé de l'invention, dans lesquelles on souhaite obturer partiellement ou en totalité une cavité ménagée dans un support quelconque ou mouler un objet ou même le recouvrir de résines photopolymérisables.

L'invention sera décrite ci-après spécifiquement dans le domaine d'application qui concerne la mise en place puis la solidification d'un produit initialement pâteux dans une cavité dentaire.

Elle peut s'appliquer de la même façon à bien d'autres domaines industriels, par exemple à ceux du moulage et de la fonderie de précision notamment au procédé de fonderie dit " à cire perdue " appliqué par example à des pièces de petites tailles.

D'une façon résumée, dans le domaine d'application dentaire pris comme exemple, le traitement notamment des caries dentaires en méthode directe est réalisé fréquemment par l'adjonction d'une résine composite ou d'un amalgame que le praticien dépose dans la cavité préalablement assainie, la solidarisation de l'amalgame étant obtenue par sertissage et/ou par des microrétentions situées sur les parois de la cavité.

Dans le cas d'une résine composite esthétique le durcissement est obtenu par polymérisation à l'aide d'un moyen chimique ou par radiation électromagnétique.

Concernant ce dernier cas, le procédé actuellement utilisé consiste, après avoir assaini les parois de la cavité dentaire à traiter, puis à déposer, en plusieurs couches successives, une masse de résine composite photosensible destinée à obturer ladite cavité, puis à effectuer le durcissement, couche par couche, par photopolymérisation de la résine à l'aide d'une radiation électromagnétique, telle que, par exemple, un rayonnement lumineux issu d'une source de lumière dont la longueur d'onde correspond à la réaction d'initiation et de solidification de la résine.

Ce procédé de photopolymérisation présente des avantages appréciables par rapport aux techniques chimiques habituelles encore actuellement pratiquées car il ne requiert plus de la part du praticien une intervention rapide due à la faible durée de prise du durcisseur.

Ces inconvénients n'existent pas avec la technique utilisant une résine photosensible puisque la réaction de photopolymérisation de la résine visqueuse ne commence qu'au moment de la mise en action du rayonnement déclenchée par le praticien.

Cependant, il a été constaté que certains patients traités par cette méthode souffraient de douleurs aiguës car la résine adhère aux parois de la dent, notamment à celles de la chambre pulpaire où se situent les nerfs et les vaisseaux sanguins, et les met sous contrainte lors de sa rétraction. De plus, la polymérisation toujours incomplète en fond de cavité y laisse des monomères libres toxiques pour la pulpe dentaire.

Dans le cas d'applications industrielles, par exemple au domaine du moulage de précision, ce phénomène de retrait bien connu des professionnels, constitue un véritable inconvénient car préjudiciable à la qualité et à la précision des formes et des surfaces moulées.

La présente invention a pour but de remédier à ces inconvénients et concerne un procédé de photopolymérisation différentielle à retrait compensé pour le moulage de précision et l'obturation d'une cavité dentaire en une seule fois à partir de résines photopolymérisables, procédé évitant, lors du durcissement de la résine, que les parois de la dent soient sollicitées et qui assure une photomolymérisation complète de la résine.

A cet effet, le procédé de moulage ou d'obturation d'une cavité dentaire du type dans lequel on dépose dans une cavité ou dans un moule une résine photosensible destinée à être solidifiée par photopolymérisation est remarquable, selon l'invention, en ce que :
- on dépose sur les parois de ladite cavité ou moule une couche d'une première résine photosensible ;
- on dépose ensuite, sur ladite couche de la première résine photosensible, une masse d'une seconde résine photosensible obturant le reste de ladite cavité ;
- on effectue le durcissement par photopolymérisation de ladite masse ; et
- on effectue ensuite, après le durcissement de ladite masse, le durcissement de ladite couche de la première résine photosensible.

Ainsi, grâce à l'invention, le retrait lors du durcissement de la masse de la seconde résine photosensible occupant la majeure partie du volume défini par la cavité ou le moule n'agit pas directement sur les parois mêmes de ladite cavité ou dudit moule, puisque la couche de la première résine, déposée entre ces parois et la masse de résine, est encore visqueuse et fait office par conséquent de couche tampon. On effectue, seulement après le durcissement de ladite masse, le durcissement de ladite couche de première résine dont la faible épaisseur déposée sur les parois de ladite cavité n'exerce pas, lors de sa solidification, des tractions suffisantes sur les parois pour provoquer des douleurs ou des variations dimensionnelles de forme ou de surface.

Par ailleurs, chacune des première et seconde résines réagissant à une radiation électromagnétique de photopolymérisation de longueur d'onde optimale et spécifique,

- on choisit, de préférence, les deux résines de façon que la radiation destinée à photopolymériser la masse de seconde résine n'agisse pas sur la couche de première résine ;

- on applique alors la radiation électromagnétique correspondant à la longueur d'onde optimale de photopolymérisation de la seconde résine à l'ensemble desdites résines déposées dans ladite cavité ; puis,

- après durcissement de ladite seconde résine, on applique la radiation électromagnétique de longueur d'onde optimale appropriée pour photopolymériser ladite première résine.

Ainsi, le procédé selon l'invention consiste à réaliser une photopolymérisation différentielle desdites résines permettant d'obtenir une réduction importante du retrait.

De plus, préalablement au dépôt de la couche constituée de la première résine photosensible et après avoir préparé la cavité de la dent ou du moule avec un gel acide, on enduit les parois de ladite cavité ou du moule d'un agent de liaison permettant la solidarisation de la résine auxdites parois.

La présente invention concerne également un outil à main destiné à la mise en oeuvre du procédé.

A cet effet, l'outil à main, selon l'invention, du type comprenant un corps sensiblement tubulaire présentant une tête à une extrémité est caractérisé en ce qu'il comporte, dans ledit corps, des moyens pour la transmission de radiations électromagnétiques lumineuses émises par une source lumineuse susceptible d'être raccordée à l'autre extrémité du corps, les moyens de transmission émergeant de la tête pour pénétrer dans les résines déposées dans la cavité de sorte que, en fonction de la longueur d'onde réglable des radiations émises, soit obtenu le durcissement par photopolymérisation de chacune des résines photosensibles.

Dans une forme préférée de réalisation, lesdits moyens pour la transmission des radiations sont constitués par une fibre optique logée dans ledit corps tubulaire et couplée par une extrémité à ladite source lumineuse, et par un bâtonnet photodistributeur à usage unique maintenu dans la tête en émergeant en partie de celle-ci, le bâtonnet, qui reçoit et transmet les radiations émises par la fibre optique, étant susceptible d'être introduit dans les résines déposées dans ladite cavité. Ainsi, après que la partie émergeante du bâtonnet ait été plongée jusqu'au voisinage du fond de la cavité dentaire ou du moule contenant les résines, la source lumineuse commandée par le praticien émet une radiation électromagnétique dont la longueur d'onde correspond à la réaction de photopolymérisation de la seconde résine, mais qui n'agit pas sur la couche constituée de la première résine qui reste alors visqueuse compensant ainsi la diminution de volume de la masse de seconde résine. Après le durcissement total de ladite masse, une radiation électromagnétique émise par la source lumineuse et dont la longueur d'onde correspond alors à la réaction de photopolymérisation de la première résine, permet la solidification de celle-ci, la partie émergeante du bâtonnet étant emprisonnée dans la masse solidifiée de seconde résine.

Lorsque le durcissement de la première résine est obtenu, le bâtonnet est désolidarisé de l'outil, puis sectionné au niveau de la face supérieure de la dent ou du moule.

Une opération de polissage termine alors le traitement ou le moulage.

Avantageusement, une cellule photoélectrique est prévue sur la tête, en étant disposée en regard desdites résines. Ainsi, la cellule, reliée à la source lumineuse, permet par l'intermédiaire d'un dispositif électronique de commande le changement de longueur d'onde de la radiation électromagnétique émise, lorsque l'opacité de la seconde résine, qui se modifie au cours de la solidification passant de l'état pâteux à l'état solide correspond au durcissemnt complet de cette résine.

Par ailleurs, afin de faciliter l'opération de montage et de démontage du bâtonnet à usage unique sur l'outil, le bâtonnet est inséré à force dans un perçage ménagé dans ladite tête.

De plus, une partie du bâtonnet restant solidaire desdites résines, celui-ci est de préférence réalisé dans une résine translucide dont les caractéristiques sont compatibles avec celles des résines déposées dans ladite cavité.

Dans un mode préféré de réalisation une optique de focalisation des radiations électromagnétiques est agencée entre la sortie de la fibre optique et le bâtonnet, ce dernier, disposé transversalement par rapport à la direction de la fibre optique, venant au contact d'un réflecteur fixé à ladite tête. On prévoit avantageusement un élément ménagé dans la tête et entourant le bâtonnet, l'élément piézoélectrique engendrant des vibrations qui ont pour effet de tasser les résines par l'intermédiaire du bâtonnet.

Enfin, selon une autre caractéristique de l'invention, afin d'assurer le nettoyage de la dent traitée, ou du moule de précision, ainsi que celui des parties avoisinantes, des conduites respectivement d'arrivée d'air et d'arrivée d'eau peuvent être fixées audit corps.

Les figures du dessin annexé feront bien comprendre comment l'invention peut être réalisée dans le cas d'une application au domaine dentaire.

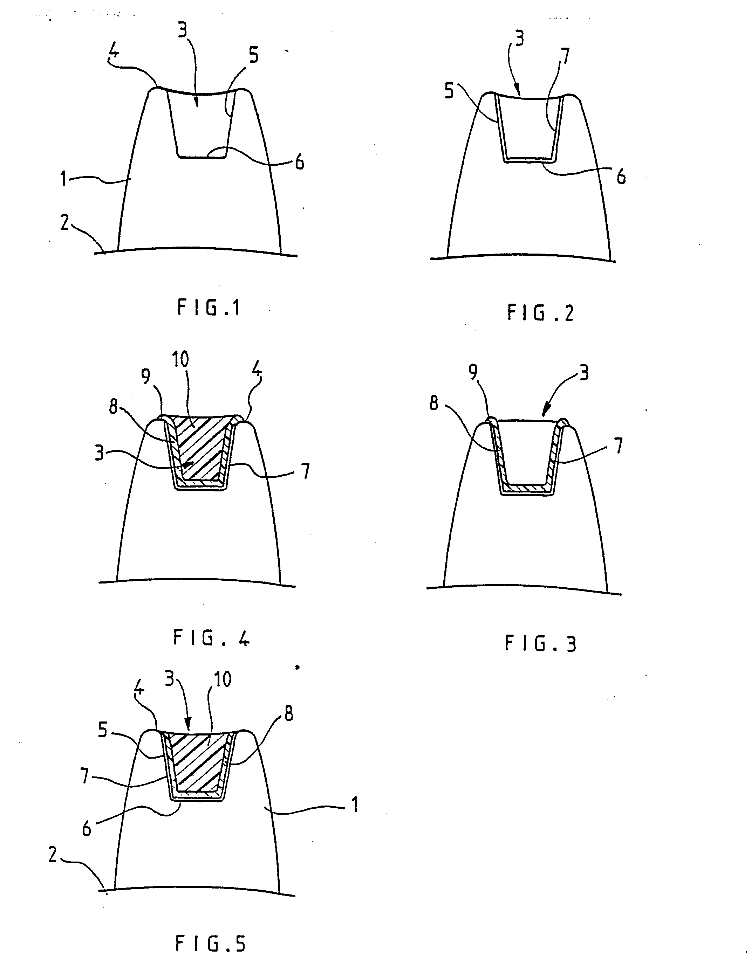

. Les figures 1, 2, 3, 4 et 5 illustrent schématiquement les différentes étapes du procédé selon l'invention destiné à obturer une cavité ou un moule.

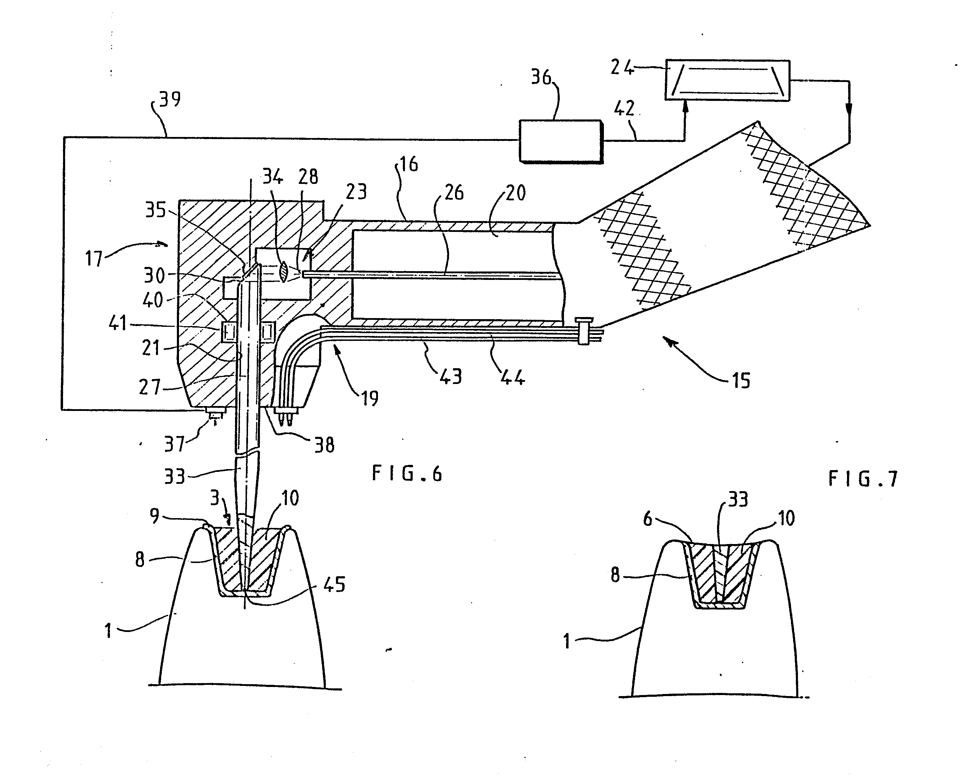

. La figure 6 représente, partiellement en coupe et schématiquement, un outil à main selon l'invention destiné à la mise en oeuvre du procédé, ledit outil étant montré dans l'étape du procédé correspondant à la photopolymérisation desdites résines.

. La figure 7 est une vue en coupe schématique d'une dent traitée selon le procédé de l'invention au moyen de l'outil à main prévu à cet effet.

Le procédé illustré par les figures 1 à 5 consiste à obturer une cavité ménagée dans une dent ou dans un moule mais d'autres applications différentes ou analogues sont visées par la présente invention.

La forme schématique représentée sur les figures illustre aussi bien une dent vue en coupe qu'un moule de précision.

Pour les besoins de la description ci-dessous, on imaginera la forme représentée comme étant celle d'une dent. Elle pourra aussi bien être celle d'un moule de précision.

On décrira ci-après le procédé de photopolymérisation selon l'invention appliqué à la cavité d'une dent. Le même procédé s'applique tout aussi bien à toute autre cavité notamment celle d'un moule de précision.

Une dent 1 implantée dans la gencive 2 présente une cavité 3 qui débouche, pour cet exemple, dans la face occlusiale 4 de la dent et est définie par ses parois latérales 5 et son fond 6.

Le praticien procède préalablement notamment à l'assainissement des parois 5 et du fond 6 de la cavité 3 de façon connue. Après avoir traité l'émail de la cavité avec un gel acide, il enduit ensuite, figure 2, les parois latérales 5 et le fond 6 d'un agent de liaison 7 ou adhésif destiné à solidariser, comme on le verra ultérieurement, les résines aux parois et au fond de la cavité 3 de la dent ou du moule, l'agent de liaison pouvant être un amélodentinocène.

Il dépose alors, figure 3, sur ledit agent de liaison 7, une couche d'une première résine photosensible 8 d'un type connu en soi. La couche 8 déborde de la cavité 3 de la dent ou du moule, comme le montre de manière accentuée la figure 3, de façon qu'une bordure latérale 9 de la couche 8 repose sur la face masticatrice 4 de la dent.

Puis, le praticien dépose sur la couche 8, figure 4, une masse d'une seconde résine photosensible 10 obturant sensiblement le reste de la cavité 3 de la dent ou du moule. Le volume de la masse de seconde résine 10 déposé correspond approximativement au volume de la cavité 3 de la dent ou du moule à obturer.

Chacune desdites première et seconde résines photosensibles constituant respectivement la couche 8 et la masse 10 est choisie pour réagir à des radiations électromagnétiques de photopolymérisation de longueur d'onde optimale spécifique ou retardataire. Ainsi, la première résine photosensible réagira sous l'action de radiations électromagnétiques dont la longueur d'onde correspond au durcissement par photopolymérisation de cette première résine, tandis que la seconde résine réagira sous l'action de radiations électromagnétiques dont la longueur d'onde, différente de celle initiant la première résine, correspond au durcissement par photopolymérisation de cette seconde résine.

Le praticien effectue alors le durcissement par photopolymérisation de la masse de seconde résine photosensible 10, laquelle sous l'action du rayonnement électromagnétique, par exemple du type lumineux, passe d'un état visqueux à un état solide. Durant la phase de solidification de la seconde résine, la première résine photosensible est toujours dans un état visqueux puisqu'elle ne réagit pas aux rayons électromagnétiques de longueur d'onde spécifique correspondant à la photopolymérisation de la seconde résine. La couche 8 fait alors office de couche intermédiaire tampon. La diminution de volume de la masse 10 de seconde résine est compensée par la couche de première résine 8 réalisant ainsi un retrait différencié puisque l'excès de celle-ci correspondant à la bordure latérale 9 déposée sur la face 4 de la dent ou du moule, s'écoule alors entre la masse 10 solidifiée et le revêtement de liaison 7. En conséquence, la masse 10 est totalement isolée des parois et du fond de la cavité 3, notamment de la chambre pulpaire dans le cas d'une dent, ce qui n'affecte pas les nerfs situés dans la chambre.

Après le durcissement total de la seconde résine, le praticien effectue, au moyen des rayons électromagnétiques de longueur d'onde spécifique (différente de celle correspondant à l'initiation de la seconde résine), le durcissement par photopolymérisation de la couche 8 de la première résine. De par la faible épaisseur de la couche 8 déposée sur les parois 5 et le fond 6 de la cavité dentaire 3 par l'intermédiaire du revêtement de liaison 7, cette fine couche 8 n'exerce pas, lors de sa solidification sous l'action des rayons lumineux, des tractions suffisantes sur les parois de la dent ou du moule, notamment la chambre pulpaire, pour provoquer alors des douleurs éventuelles. En effet, le volume de la cavité 3 de la dent ou du moule est pratiquement en totalité obturé par la masse 10 déjà solidifiée.

Puis, lorsque la couche 8 est complètement solidifiée et collée aux parois 5 et au fond 6 de la cavité 3 grâce au revêtement de liaison 7, le praticien effectue des opérations d'ébavurage, de polissage et de nettoyage sur la face desdites résines durcies afin de mettre en conformité cette surface avec celle définie par la face masticatrice 4 (figure 5).

Ainsi, grâce au procédé de l'invention, on réalise une photopolymérisation dite différentielle, éliminant par compensation les forces de traction dues au retrait de volume des résines photosensibles lors de l'opération de solidification.

L'invention concerne également un outil à main destiné à la mise en oeuvre du procédé ci-dessus décrit.

L'outil à main 15, montré sur la figure 6, comprend un corps 16 sensiblement de forme tubulaire présentant une tête 17 à une extrémité 19, l'autre extrémité du corps 16 n'étant pas illustrée. Le corps tubulaire présente un passage interne 20 débouchant dans un perçage 21 ménagé dans ladite tête 17 et de direction perpendiculaire au passage 20.

Des moyens 23 pour la transmission de radiations électromagnétiques lumineuses émises par une source lumineuse 24 sont disposés dans le corps 16. Ces moyens 23 sont reliés, par l'extrémité non représentée dudit corps 16, à la source lumineuse 24, cohérente ou non, telle, par exemple, un laser à argon. Ces moyens font saillie au-delà de la tête 17 pour pénétrer, comme on le verra ultérieurement, dans les résines photosensibles activées différentiellement déposées dans la cavité dentaire 3 ou dans le moule.

Dans ce mode de réalisation, les moyens 23 sont constitués par une fibre optique 26 et par un bâtonnet 27 photodistributeur réalisé en une matière translucide.

L'extrémité de ce bâtonnet affecte une forme telle qu'elle permette une distribution uniforme de l'énergie lumineuse dans tout le volume occupé par la seconde résine c'est-à-dire la masse 10. De plus, cette forme d'extrémité doit permettre d'éviter la formation de bulles lors de sa pénétration dans la masse 10.

Ce bâtonnet est à usage unique, c'est-à-dire perdu car comme on le verra ci-après, son extrémité reste définitivement inclue dans la masse 10 de résine. Son rôle essentiel est de distribuer uniformément spatialement l'énergie des radiations lumineuses de manière à obtenir le meilleur effet possible de photopolymérisation dans le volume dans lequel il est plongé. La fibre optique 26 est logée et maintenue dans le passage interne 20 du corps 16, et est couplée par son entrée, non représentée, à la source lumineuse 24, tandis que la sortie 28 de la fibre optique est située en regard du perçage 21, la fibre optique étant disposée dans une direction sensiblement perpendiculaire à celui-ci. Le bâtonnet 27 est, quant à lui, disposé dans le perçage 21 en étant, dans ce mode particulier de réalisation, inséré à force dans celui-ci. Le bâtonnet 27 présente une extrémité 33 de forme par exemple cylindro-conique qui émerge de la tête 17.

De plus, il est également prévu, dans l'outil 15, d'une part, une optique de focalisation telle qu'une lentille 34 agencée entre la sortie 28 de la fibre optique 826 et le bâtonnet 27 et, d'autre part, un réflecteur 35 disposé en regard de la lentille 34 en étant incliné de 45°. Le bâtonnet 27 vient s'appuyer par une extrémité taillée en pan incliné 30 contre le réflecteur 35, de sorte que, lorsqu'un rayonnement lumineux est issu de la sortie 28 de la fibre, celui-ci soit focalisé par la lentille 34, puis réfléchi par le réflecteur 35 dans la direction axiale du bâtonnet 27.

Une cellule photoélectrique 37 est fixée sur la face 38 de la tête 17, de façon à être orientée en regard des résines déposées dans la cavité 3. Cette cellule 37 est raccordée par une liaison 39 à un dispositif électronique de commande 36, lui-même relié par une liaison 42 à la source lumineuse 24. Aussi prévoit-on, dans le perçage 21 ménagé dans la tête 17, un évidement torique 40 destiné à recevoir un élément piézo-électrique 41. Les fonctions de la cellule 37 et de l'élément piézo-électrique 41 seront décrites ci-après.

Enfin, des conduites, respectivement d'arrivée d'eau 43, et d'arrivée d'air 44, sont fixées au corps 16, chaque orifice de sortie débouchant au niveau de la face 38 de la tête 17.

Le praticien met en place le bâtonnet 27 à usage unique dans le perçage 21 ménagé dans la tête, de façon que le pan incliné 30 vienne correctement en appui contre le réflecteur 35. Le bâtonnet, emmanché à force, est réalisé en une résine translucide compatible avec celles déposées préalablement dans la cavité 3, ou, dans un autre mode d'exécution, le bâtonnet peut être réalisé en verre coulé.

L'outil 15 est raccordé par l'intermédiaire de la fibre optique 26 à la source lumineuse 24. Après la mise en fonctionnement de cette dernière, le praticien plonge dans la masse 10 la partie cylindro-conique émergente 33 du bâtonnet 27 de façon que sa face d'extrémité 45, parfaitement polie, soit située au voisinage du fond 6 de la cavité 3 contenant la masse 10 de seconde résine et la couche 8 de première résine. La source lumineuse 24, commandée par le praticien, émet alors, après sélection, filtrage ou autre, une radiation électromagnétique correspondant à l'une des couleurs du spectre visible. La longueur d'onde du rayonnement lumineux correspond à la réaction de photopolymérisation de la masse 10 de seconde résine. Ce rayonnement lumineux traverse alors les moyens 23, c'est-à-dire la fibre optique 26, la lentille de focalisation 34 puis se réfléchit grâce au réflecteur 35 dans la direction du bâtonnet 27 pour déboucher par la face d'extrémité 45 de l'extrémité émergeante 33 du bâtonnet 27 dans les résines photosensibles.

La réaction de photopolymérisation de la masse 10 de seconde résine photosensible commence alors.

Avantageusement, l'élément piézo-électrique 41 engendre des vibrations transmises par le bâtonnet 27 à la masse de résines, qui ont pour effet de tasser notamment la masse de seconde résine. Durant le changement d'état de celle-ci, passant de l'état pâteux ou visqueux à l'état solide, l'opacité de la masse 10 de seconde résine varie. Cette variation d'opacité est détectée par la cellule photoélectrique 37. Ainsi, lorsque l'opacité de la masse 10 de seconde résine correspond à la solidification totale de celle-ci, la cellule photoélectrique 37 émet un signal, transmis par la liaison 39, au dispositif électronique de commande 36 relié à la source 24. Ce dispositif de commande déclenche automatiquement le changement ou modifie la sélection de longueur d'onde du rayonnement lumineux émis. La nouvelle longueur d'onde spécifique, en service ou sélectionnée, correspond alors à la réaction de photopolymérisation de la couche 8 de première résine photosensible, change de couleur.

La première résine, isolant la masse 10 de seconde résine des parois et du fond de la cavité, durcit jusqu'à atteindre sa solidification totale.

Dans ce procédé, l'énergie d'activation destinée à photopolymériser la masse de seconde résine est inférieure à l'énergie d'activation destinée à photopolymériser la couche de première résine.

Le praticien arrête le fonctionnement de la source lumineuse 24. L'extrémité émergente 33 est alors partiellement emprisonnée et solidarisée à la masse 10 de seconde résine.

Le praticien désolidarise alors le bâtonnet 27 à usage unique de l'outil à main 15, le bâtonnet se trouvant en partie inséré dans les résines durcies. A l'aide d'une pince coupante ou d'un outil analogue, le praticien sectionne, au ras de la face supérieure, le partie émergeante du bâtonnet. Puis, une opération d'ébavurage classique, terminée par une opération de polissage, achèvent le traitement complet. Le nettoyage de celle-ci ainsi que des parties avoisinantes est assuré par les conduites d'arrivée d'air 44 et d'eau 43.

La dent ainsi traitée ou le moule garni par le procédé de l'invention mis en oeuvre par l'outil spécifique, est illustrée schématiquement en regard de la figure 7.

L'emploi de deux résines autocalcinables et photopolymérisables, à deux radiations lumineuses de longueur d'onde différentes, permet de viser des applications en fonderie de précision. En effet, les résines autocalcinables actuelles ne laissant aucun résidu apparent, l'utilisation du procédé de coulage ou de moulage dit "à cire perdue" permet de réaliser, avec une grande précision, grâce à la présente invention, des formes creuses notamment sur des pièces de petites tailles.

## Revendications

1. Procédé pour obturer une cavité d'un moule ou d'une dent, du type dans lequel on dépose dans la cavité (3) une résine photosensible destinée à être solidifiée par photopolymérisation, caractérisé en ce que l'on dépose sur les parois (5, 6) de la cavité (3) une couche (8) d'une première résine photosensible à une première radiation lumineuse, on coule ensuite sur la couche (8) une masse (10) d'une seconde résine photosensible à une seconde radiation lumineuse la cavité (3), on effectue le durcissement par photopolymérisation de la masse (10) par l'action de la seconde radiation lumineuse à l'aide d'un transmetteur plongé dans la masse (10), et on effectue ensuite, après le durcissement de la masse (10), le durcissement de la couche (8) de résine photosensible par l'action de la première radiation lumineuse à l'aide du même transmetteur plongé dans la masse (10).

2. Procédé selon la revendication 1, caractérisé en ce que, chacune des première et seconde résines réagissant à des radiations électromagnétiques de photopolymérisation de longueur d'onde optimale spécifique, on choisit les deux résines de façon que la radiation destinée à photopolymériser la masse (10) de seconde résine n'agisse pas sur la couche (8) de première résine ; on applique alors la seconde radiation électromagnétique lumineuse correspondant à la longueur d'onde optimale de photopolymérisation de la seconde résine à l'ensemble des résines déposées dans la cavité (3) puis, après le durcissement de la seconde résine, on applique la première radiation électromagnétique lumineuse de longueur d'onde optimale appropriée pour photopolymériser la première résine.

3. Procédé selon l'une des revendications 1 ou 2, caractérisé en ce que préalablement au dépôt de la couche (8) constituée par la première résine photosensible, on enduit les parois de la cavité (3) d'un agent de liaison (7).

4. Outil à main destiné à la mise en oeuvre du procédé, du type comprenant un corps (16) sensiblement tubulaire présentant une tête (17) à une extrémité (19), caractérisé en ce qu'il comporte, dans ledit corps, des moyens (23) pour la transmission de radiations électromagnétiques émises par une source lumineuse (24), cohérente ou non cohérente, susceptible d'être raccordée à l'autre extrémité dudit corps, les moyens de transmission (23) émergeant de la tête (17) pour pénétrer dans lesdites résines déposées dans la cavité (3) de sorte que, en fonction de la longueur d'onde sélectionnée des radiations lumineuses émises, soit obtenu successivement le durcissement par photopolymérisation de chacune des résines photosensibles.

5. Outil à main selon la revendication 4, caractérisé en ce que les moyens (23) pour la transmission des radiations lumineuses sont constitués par une fibre optique (26), logée dans ledit corps tubulaire et couplée par une extrémité à la source lumineuse (24), et par un bâtonnet (27) maintenu dans la tête (17) en émergeant en partie de celle-ci ; ledit bâtonnet (27) recevant et transmettant uniformément les radiations lumineuses émises par la fibre optique (26), est introduit dans les résines déposées dans ladite cavité (3).

6. Outil à main selon l'une des revendications 4 ou 5, caractérisé en ce qu'une cellule photoélectrique (37) est prévue sur ladite tête (17) en étant disposée en regard desdites résines déposées dans la cavité, ladite cellule (37) étant reliée à ladite source lumineuse (24).

7. Outil à main selon l'une des revendications 5 ou 6, caractérisé en ce que ledit bâtonnet (27) est inséré à force dans un perçage (21) ménagé dans ladite tête (17).

8. Outil à main selon l'une des revendications 5 à 7, caractérisé en ce que ledit bâtonnet (27) est réalisé dans une résine translucide compatible avec celles déposées dans ladite cavité dentaire (3).

9. Outil à main selon l'une des revendications 5 à 8, caractérisé en ce qu'une optique de focalisation (34) des radiations électromagnétiques émises par la source lumineuse (24) est agencée entre la sortie (28) de la fibre optique (26) et le bâtonnet (27), ce dernier, est disposé transversalement par rapport à la direction de ladite fibre optique, et vient au contact d'un réflecteur (35) fixé à ladite tête.

10. Outil à main selon l'une des revendications 4 à 9, caractérisé en ce qu'un élément piézo-électrique (41) est agencé dans un évidement (40) ménagé dans ladite tête (17) et en ce que des conduites respectivement d'arrivée d'air (44) et d'arrivée d'eau (43) sont fixées à ladite tête (17).

0286558

FIG.1

FIG.2

FIG.4

FIG.3

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 605 085  (TOUATI et al.)<br>* Figures 1,2; page 5, lignes 16-27; page 13, lignes 17-24 *<br>--- | 1,4 | A 61 C   19/00<br>A 61 C    5/00 |
| A | US-A-3 254 411  (SHELLEY)<br>* Figure; colonne 1, lignes 38-51 *<br>--- | 1,4 | |
| A | EP-A-0 046 939  (DENTSPLY INTERNATIONAL, INC.)<br>* Figure 1; page 3, lignes 1-20 *<br>--- | 1-5 | |
| A | GB-A-2 016 994  (SANKIN INDUSTRY CO.)<br>* Page 2, lignes 37-59 *<br>--- | 1,4 | |
| A | FR-A-2 182 092  (AMALGAMATED DENTAL CO. LTD)<br>* Revendications 1-5; figure 1 *<br>----- | 1-5 | |

**DOMAINES TECHNIQUES RECHERCHES (Int. Cl.4)**

A 61 C

Le présent rapport a été établi pour toutes les revendications

| Lieu de la recherche | Date d'achèvement de la recherche | Examinateur |
|---|---|---|
| LA HAYE | 04-07-1988 | RAKOWICZ,J.M. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)